# EUROPEAN PATENT APPLICATION

(11) **EP 3 128 146 A1**
(43) Date of publication of application: **08.02.2017**
(21) Application number: 16275105.1
(22) Date of filing: 27.07.2016
(51) Int. Cl.: F01P 3/20, F01P 7/16

(54) **HYBRID VEHICLE COOLING SYSTEM**

(30) Priority: 05.08.2015 GB 201513854
(71) Applicant: Avid Technology Limited, Cramlington, Northumberland NE23 1WG (GB)
(72) Inventor: Alexakis, Athanasios, Newcastle-upon-Tyne NE7 7DJ (GB); Maughan, Ryan, Stocksfield, Northumberland NE43 7PG (GB)
(74) Representative: Elsworth, Dominic Stephen

(57) **Abstract**

A cooling system for a hybrid vehicle comprises an indirect charge air cooler and an electro-cooler, the charge air cooler and the electro-cooler each in fluid communication with a common low temperature radiator. The cooling system comprises at least one pump for circulating fluid around the radiator and the charge air cooler and the electro-cooler, at least one fan having a variable speed motor associated with the low temperature radiator and configured to cause air to pass through the low temperature radiator, a controller and a plurality of sensors. The plurality of sensors includes a sensor for sensing the coolant fluid temperature at the outlet of the charge air cooler and a sensor for sensing the coolant fluid at the outlet of the electro-cooler. The variable speed motor of the at least one fan and the variable speed motor of the at least one pump are each connected to the controller, and the controller is configured to adjust the respective speeds of the variable speed motor of the at least one pump and the variable speed motor of the at least one fan according to the temperatures recorded by the temperature sensors and preset threshold temperatures.

## Description

### Field of the Invention

The present invention relates to a cooling system for a hybrid vehicle and in particular to a hybrid vehicle having indirect charge cooling of air for its internal combustion engine.

### Background of the Invention

Hybrid vehicles use both power from internal combustion engines and electrical power. Electrical energy is generated either from energy recovery systems on the vehicle or from a generator powered by the internal combustion engine. Some hybrid vehicles include batteries to store electrical energy and the facility to recharge these from the mains supply. Electrical energy may be used to drive motion of the vehicle, or may be used only to power systems required by the vehicle, such as electrically powered cooling fans for example.

The increased use of electrical energy in vehicles creates an additional cooling demand. It is of course well understood that internal combustion engines require cooling and also that hydraulic circuits require cooling. In common with this, electrical energy consuming and generating devices also generate heat. This heat needs to be dissipated in order that electrical and electronic components can be operated within a temperature range that allows them to work at optimum efficiency.

Many internal combustion engines utilise a compressor to pressurise charge air. Typically, such a compressor is in the form of a turbo-charger or a super-charger. In order to increase the efficiency of this process it is common to use a charge cooler to remove heat of compression from the charge air. Such charge coolers are also known as intercoolers. Two types of charge cooler are commonly used. The most common uses ambient air as the cooling medium. This technique is known as direct charge cooling. Alternatively, a liquid can be used as the cooling medium. This technique is known as indirect charge cooling.

The present invention is concerned with indirect charge cooling.

One of the issues that presents itself, particularly in relation to vehicles used in urban transport is that of packaging the cooling system. This is particularly so where hybrid systems are retro-fitted to a vehicle. The space available for additional equipment is limited.

Where indirect charge cooling is used the common practice is to use a fixed flow rate pump that is sized to provide sufficient cooling capacity to meet the peak charge cooling demand.

As mentioned above, the electrical and electronic systems of hybrid vehicles need to be cooled. Typically, a dedicated cooling system would be provided for the electrical and electronic systems.

It has been recognised that the optimum operating temperature range for electrical and electronic systems overlaps with the optimum operating temperature range for charge air. Whilst the optimum temperature for engine and transmission coolant is between 90 an 100C, the optimum temperature range for charge air is approximately 15C above ambient temperature and not less than -15C. The optimum temperature for electrical and electronic components is less than 60C but not less than 0C, but ideally above 15C.

It would be desirable to provide a more efficient cooling system for a hybrid vehicle. The present invention seeks to provide such a cooling system.

### Summary of the Invention

According to a first aspect of the invention there is provided a cooling system for a hybrid vehicle comprising an indirect charge air cooler and an electro-cooler, the charge air cooler and the electro-cooler each in fluid communication with a common low temperature radiator, the cooling system comprising at least one pump for circulating fluid around the radiator and the charge air cooler and the electro-cooler, at least one fan having a variable speed motor associated with the low temperature radiator and configured to cause air to pass through the low temperature radiator, a controller and a plurality of sensors, wherein the plurality of sensors includes a sensor for sensing the coolant fluid temperature at the outlet of the charge air cooler and a sensor for sensing the coolant fluid at the outlet of the electro-cooler, and wherein the variable speed motor of the at least one fan and the variable speed motor of the at least one pump are each connected to the controller, and wherein the controller is configured to adjust the respective speeds of the variable speed motor of the at least one pump and the variable speed motor of the at least one fan according to the temperatures recorded by the temperature sensors and preset threshold temperatures.

Advantageously, the cooling system comprises a charge air temperature sensor configured for sensing the charge air temperature at the charge air outlet, the charge air temperature sensor output forming an input to the controller, wherein the controller is configured to adjust the respective speeds of the variable speed motor of the at least one pump and the variable speed motor of the at least one fan according to the temperature sensed by the charge air temperature sensor and preset threshold temperatures.
Preferably, a common pump for circulating coolant fluid around the radiator and the charge air cooler and the electro-cooler may be adopted with a flow control valve that is configurable to direct coolant to a respective one of the charge air cooler and the electro-cooler. Alternatively, the first cooler and the second cooler are each provided with a dedicated pump for circulating coolant fluid around the radiator and a respective one of the charge air cooler and the electro-cooler.
The cooling system may comprise at least two fans each having a variable speed motor associated with the radiator.
Preferably, the charge air cooler and the electro-cooler are arranged in parallel. The charge air cooler and electro-cooler may arranged in series.
The cooling system may further comprise a high temperature radiator configured to cool other elements of the vehicle, wherein the low temperature radiator and the high temperature radiator are mounted adjacent one another, and wherein at least one fan having a variable speed motor is common to the low temperature radiator and the high temperature radiator, and wherein the speed of the at least one common fan is controllable by the controller according to the temperatures sensed by the temperature sensors.

According to a second aspect of the invention there is provided a method of cooling a hybrid vehicle having an indirect charge air cooler and an electro-cooler utilising a cooling system according to the first aspect of the invention, comprising the steps of:
sensing the temperature of coolant fluid at the outlet of the charge air cooler and the electronic component cooler;
comparing the sensed temperatures with threshold temperatures;
controlling the at least one pump associated with first and second coolers to control the flow of coolant fluid therethrough;
controlling the speed of the at least one fan associated with the low temperature radiator and/or the common fan.

The method may comprise the further step of sensing the temperature of the charge air at the outlet of the charge air cooler and wherein the sensed temperature of the charge air at the outlet of the charge air cooler is one of the temperatures compared with threshold temperatures.

By utilising the same cooling system to provide cooling for both the electrical and electronic systems and the charge cooling of a vehicle the whole vehicle can be made more efficient. Not only are the cooling systems not duplicated but a greater cooling effect can be provided to each of the elements requiring cooling when cooling is required, since the maximum charge cooling requirements and the maximum electrical and electronic systems cooling requirements do not coincide and therefore additional cooling capacity can be diverted from one system to the other at periods of peak demand.

In the specification the term, "electro-cooler" is used to define a cooling device that is used to cool an electrical or electronic device that presents a cooling demand.

### Brief Description of the Drawings

In the Drawings, which illustrated preferred embodiments of the invention and are by way of example:
Figure 1 is a schematic representation of a cooling system for a hybrid vehicle;
Figure 2 is a schematic representation of a controller for the cooling system illustrated Figure 1;
Figure 3 is an exploded view of the cooling apparatus of the cooling system illustrated in Figure 1.

### Detailed Description of the Preferred Embodiments

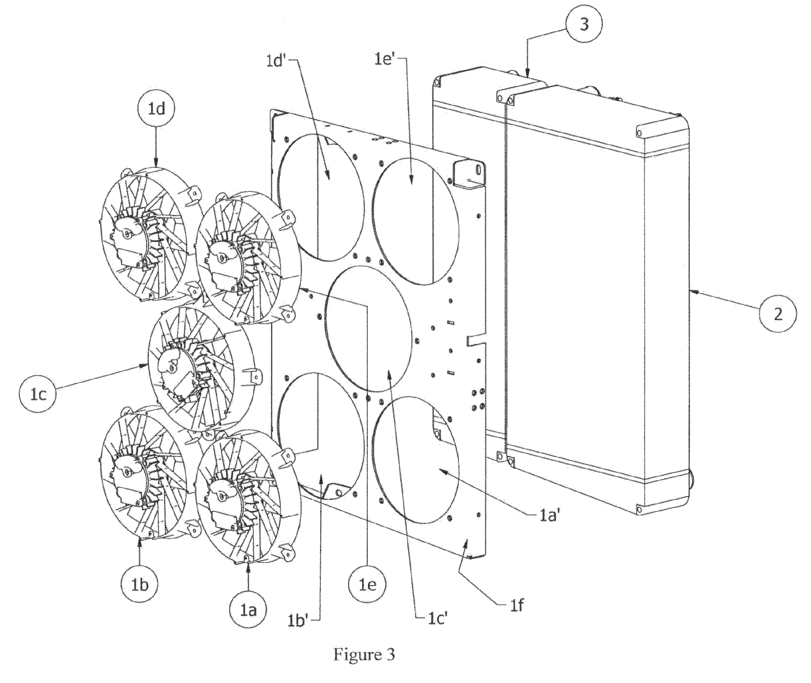

Referring now to Figure 3, a hybrid vehicle cooling system 1 includes a jacket water radiator assembly 2 and attached thereto a low temperature radiator assembly 3. The cooling system includes a plurality of cooling fans 1a - 1e configured to force air through the jacket water assembly 2 and the low temperature radiator 3. Each cooling fan 1 a-1 e is provided with an electric motor and each electric motor is controlled independently of the others. The fans are mounted on a plate 1f, which is provided with openings 1a' to 1e' each for alignment with a respective one of the fans 1 a to 1 e. As can be seen the central fan 1 e is partially aligned with both the jacket water assembly 2 and the low temperature radiator 3, but primarily with the jacket water assembly 2. Two of the fans 1 a, 1 e (those to the left hand side in Figure 3) are associated solely with the jacket water assembly 2, whilst two of the fans 1 b, 1 d (those to the right hand side in Figure 3) are associated primarily with the low temperature radiator 3 and partially with the jacket water assembly 2.

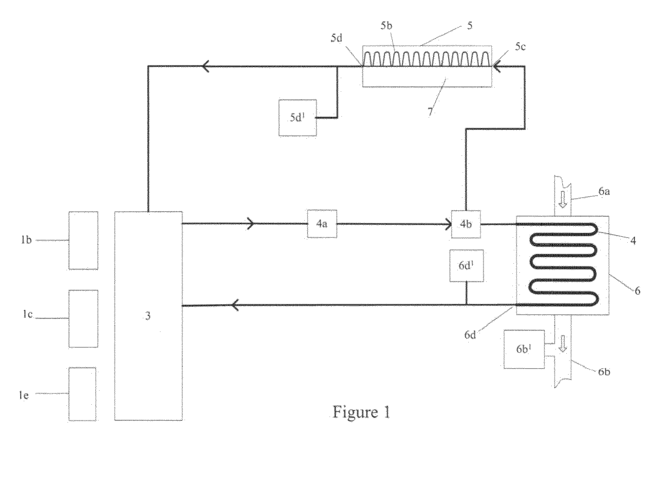

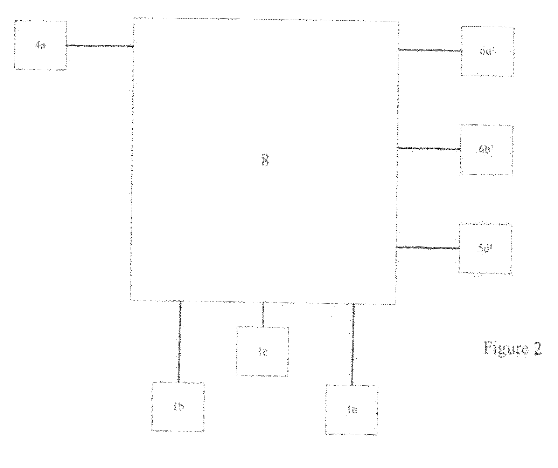

Referring now to Figures 1 and 2, the cooling circuit shown in Figure 1 includes two heat exchangers 4, 5 connected to the low temperature radiator 3. The heat exchanger 4 forms part of the charge air cooler 6, which has a charge air inlet 6a and a charge air outlet 6b. The heat exchanger 5 forms part of an electro-cooler 7. The heat exchanger 5 comprises an inlet 5c and an outlet 5d. Coolant from the low temperature radiator 3 passes over fins 5b which provide a heat sink to the electro-cooler 7.

Coolant pump 4a pumps coolant liquid from the low temperature radiator 3 to the respective heat exchangers 4, 5 and back to the low temperature radiator 3.

In Figure 1 the heat exchangers 4, 5 are connected to the low temperature radiator 3 in parallel utilizing a single pump to control flow through both heat exchangers. If required a flow control valve may be introduced to control the flow to each heat exchanger. In a parallel connection of the heat exchangers to the low temperature radiator, instead of providing a single pump, a dedicated pump for each of the heat exchangers 4 and 5 may be used. However, 4 and 5 could also be connected in series if so desired.

The cooling system 1 comprises a master controller 8. The function of the master controller 8 is to control the flow of fluid through the low temperature radiator 3 and the heat exchangers 4, 5, and the speed of the fans 1 b, 1 c and 1 e associated with the low temperature radiator 3. A number of sensors are provided for temperature monitoring. Sensor 6b' senses the temperature of the charge air at the outlet 6b of the charge air cooler. Sensor 5d' senses the temperature of the fluid leaving the heat exchanger 5 via outlet 5d. Sensor 6d' senses the temperature of the fluid leaving the heat exchanger outlet 6d. The outputs of each of the sensors 5d', 6b', 6d' form inputs to the master controller 8.

It is preferable that the controller is configured to adjust the speed of coolant flow, for example by adjusting the pump 4a, before adjusting the fan speed(s) 1 a to 1 e.

The number of heat exchangers may be increased according to the requirement for cooling and the cooling capacity of the low temperature radiator 3.

In normal operation of a hybrid vehicle, the peak cooling demand from the charge air cooler 6 will not occur at the same time as the peak cooling demand from the electro-cooler 7. This means that the amount of fluid flowing around the charge air cooler 6 can be increased and the amount of fluid flowing around the electro-cooler 7 can be decreased when peak demand at the charge air cooler occurs, for example when the vehicle is accelerating up a incline. Peak demand is by its nature transient. Where a flow control valve 4b is provided, the volume of coolant may be directed to one or other of the charge cooler 6 and the electro-cooler 7 may be controlled by adjusting the flow control valve 4b.

Typically, the low temperature radiator 3 is situated on a front, side, rear or roof of a vehicle, but the heat exchangers may be situated around the vehicle wherever there is a demand for cooling. By associating both the charge air cooler 6 and the electro-cooler 7 with a common low temperature radiator and by monitoring and controlling the cooling system, the overall size of the cooling circuit may be reduced, whilst providing cooling that is at least as good if not better than systems of the prior art have been able to provide. This reduction in size allows packaging problems to be addressed.

## Claims

1. A cooling system for a hybrid vehicle comprising an indirect charge air cooler and an electro-cooler, the charge air cooler and the electro-cooler each in fluid communication with a common low temperature radiator, the cooling system comprising at least one pump for circulating coolant fluid around the radiator and the charge air cooler and the electro-cooler, at least one fan having a variable speed motor associated with the low temperature radiator and configured to cause air to pass through the low temperature radiator, a controller and a plurality of sensors, wherein the plurality of sensors includes a sensor for sensing the coolant fluid temperature exiting the charge air cooler and a sensor for sensing the coolant fluid exiting the electro-cooler, and wherein the variable speed motor of the at least one fan and the variable speed motor of the at least one pump are each connected to the controller, and wherein the controller is configured to adjust the respective speeds of the variable speed motor of the at least one pump and the variable speed motor of the at least one fan according to the temperatures recorded by the temperature sensors and preset threshold temperatures.

2. A cooling system according to Claim 1, comprising a charge air temperature sensor configured for sensing the charge air temperature exiting the charge air cooler, the charge air temperature sensor output forming an input to the controller, wherein the controller is configured to adjust the respective speeds of the variable speed motor of the at least one pump and the variable speed motor of the at least one fan according to the temperature sensed by the charge air temperature sensor and preset threshold temperatures.

3. A cooling system according to Claim 1 or 2, wherein the first cooler and the second cooler are each provided with a dedicated pump for circulating coolant fluid around the radiator and a respective one of the charge air cooler and the electro-cooler.

4. A cooling system according to any preceding claim, comprising at least two fans each having a variable speed motor associated with the radiator.

5. A cooling system according to any preceding claim, wherein the charge air cooler and the electro-cooler are arranged in parallel.

6. A cooling system according to any of Claims 1 to 4, wherein the charge air cooler and electro-cooler are arranged in series.

7. A cooling system according to any preceding claim, further comprising a high temperature radiator configured to cool other elements of the vehicle, wherein the low temperature radiator and the high temperature radiator are mounted adjacent one another, and wherein at least one fan having a variable speed motor is common to the low temperature radiator and the high temperature radiator, and wherein the speed of the at least one common fan is controllable by the controller according to the temperatures sensed by the temperature sensors.

8. A method of cooling a hybrid vehicle having an indirect charge air cooler and an electro-cooler utilising a cooling system according to any of Claims 1 to 7, comprising the steps of:
sensing the temperatures of coolant fluid exiting the charge air cooler and the electronic component cooler;
comparing the sensed temperatures with threshold temperatures;
controlling the at least one pump associated with first and second coolers to control the flow of coolant fluid therethrough;
controlling the speed of the at least one fan associated with the low temperature radiator and/or the common fan.

9. A method of cooling a hybrid vehicle according to Claim 8, comprising the further step of sensing the temperature of the charge air exiting the charge air cooler and wherein the sensed temperature of the charge air exiting the charge air cooler is one of the temperatures compared with threshold temperatures.
